# EUROPÄISCHE PATENTSCHRIFT

(11) **EP 2 316 708 B1**
(45) Veröffentlichungstag und Bekanntmachung des Hinweises auf die Patenterteilung: **09.05.2012**
(21) Anmeldenummer: 10013839.5
(22) Anmeldetag: 21.10.2010
(51) Int. Cl.: B62D 6/00, B62D 5/00, B62D 5/04

(54) **Aktives Lenksystem für Kraftfahrzeuge**
Active steering system for motor vehicles
Système de guidage actif pour véhicules automobiles

(30) Priorität: 30.10.2009 DE 102009051471
(43) Veröffentlichungstag der Anmeldung: 04.05.2011
(73) Patentinhaber: Audi AG, 85045 Ingolstadt (DE)
(72) Erfinder: Ullmann, Stefan, 80797 München (DE); Stemmer, Martin, 85445 Niederding (DE)
(74) Vertreter: Patzelt, Heike Anna Maria

(56) Entgegenhaltungen:
- DE-A1- 10 357 922
- DE-A1- 19 749 005
- DE-A1-102004 009 467
- DE-A1-102004 028 829
- DE-A1-102008 036 772
- US-A1- 2006 041 360

## Beschreibung

Die Erfindung betrifft ein aktives Lenksystem für Kraftfahrzeuge gemäß Oberbegriff des Patentanspruchs 1.

Ein gattungsbildendes aktives Lenksystem ist aus der US 2006/041360 A1 bekannt, welches als übergeordnete Fahrzeugsteuereinheit mit einem übergeordneten Algorithmus als Steuerstrategie ausgebildet ist, mit dem eine Gesamtsteuerung des Fahrzeugs durchgeführt und über den Einsatz von Untersystemen entschieden wird. Diese übergeordnete Fahrzeugsteuereinheit umfasst ferner Unter-Algorithmen für Fahrsysteme, wie ABS (Antiblockiersystem)- und TCS (Traction Control System)-System, als auch Algorithmen für eine elektrische Servolenkung (EPS) und eine aktives Gierwinkel-Kontrollsystem (AYC, active yaw control) zur Steuerung einer Überlagerungslenkung. In Abhängigkeit der aktuellen Fahrsituation werden mittels des übergeordneten Algorithmus die Fahrzeugsysteme unter Nutzung verschiedener Steuerstrategien gesteuert, so dass Steuerkonflikte zwischen den Fahrzeugsystemen vermieden, bzw. Priorisierungen hinsichtlich Steuersignale dieser Fahrzeugsysteme durchgeführt werden.

Ferner ist aus der DE 100 32 340 A1 ist ein Lenksystem mit Fahrerassistenzsystemen, wie Fahrdynamikregelung (ESP) und Spurführungsregelung (Spurhalteassistent) als Einzelsysteme bekannt, die Steuersignale für einen der Zahnstange zugeordneten Servoantrieb einer Servolenkung und/oder einem in der Lenksäule angeordneten Überlagerungsgetriebe einer Überlagerungslenkung erzeugen. Bei diesem Lenksystem erfolgt der Eingriff der Fahrdynamikregelung durch Ansteuern des Servoantriebs, wobei gleichzeitig das Überlagerungsgetriebe so gesteuert wird, dass das durch den Fahrdynamikeingriff verursachte Handmoment am Lenkrad kompensiert wird, wodurch das Lenkgefühl unabhängig von der Momentenunterstützung beeinflusst werden kann. Im Fall einer automatischen Spurführung wird ein entsprechendes zusätzliches Lenkmoment erzeugt, das jedoch mittels der Überlagerungslenkung nicht kompensiert wird, so dass der Fahrer dadurch den Eingriff aufgrund des zusätzlich auf das Lenkrad aufgebrachte Moment spürt und entscheiden kann, ob er der Spurführungsregelung folgen möchte.

Bei diesem bekannten Lenksystem gemäß der DE 100 32 340 A1 ist jedoch die Flexibilität hinsichtlich der Realisierung möglicher Lenkfunktionen eingeschränkt, da der Servoantrieb ausschließlich zur Einstellung des Radwinkels und die Überlagerungs-lenkung ausschließlich zur Momentenkorrektur verwendet wird.

Desweiteren beschreibt die DE 101 32 440 A1 eine Management-Einrichtung für das Management der Beeinflussung des Fahrverhaltens eines Fahrzeugs durch mehrere Einzelsysteme, wie bspw. durch eine Fahrdynamikregelung (ESP), eine Überlagerungslenkung (EAC) sowie eine Wankstabilisierung (EAR, ARS). Dabei steuern diese Einzelsysteme direkt die entsprechenden Aktoren einer Bremsanlage, einer Lenkung bzw. eines Fahrwerks an, wobei die Management-Einrichtung die Aktivität dieser Einzelsysteme überwacht und situationsabhängig deren Wirkungen beeinflusst. Hierzu ist eine Kommunikationsverbindung zwischen der Management-Einrichtung und den Steuergeräten der Einzelsysteme eingerichtet. So können die Einzelsystem vollständig unabhängig voneinander agieren; das heißt, dass ohne einen Eingriff durch die Management-Einrichtung die Einzelsysteme in ihrer Wirkung unabhängig voneinander sind und erst wenn eine unerwünschte gegenseitige Beeinflussung der Einzelsysteme erfolgen könnte, kann die Management-Einrichtung eingreifen, indem diese direkt ein Einzelsystem oder mehrere dieser Einzelsysteme mittels an deren Steuergeräte gesendeten Steuerbefehle beeinflusst.

Dieses System gemäß der DE 101 32 440 A1 weist jedoch den Nachteil auf, dass der Algorithmus der Management-Einrichtung in den Algorithmus der jeweiligen zu überwachenden Steuergeräte eingebettet werden muss, da es ansonsten nicht möglich ist, ggf. eine unerwünschte Aktion eines Einzelsystems zu unterdrücken, wodurch insgesamt eine solches Systems eine hohe Komplexität aufweist.

Aufgabe der Erfindung ist es daher, ein verbessertes Lenksystem der eingangs genannten Art anzugeben, mit dem eine Koordination der Aktivitäten der Einzelsysteme möglich ist und das eine geringe Komplexität aufweist, ohne dass dabei unerwünschte gegenseitige Beeinflussungen der Einzelsysteme stattfinden können.

Diese Aufgabe wird gelöst durch ein aktives Lenksystem mit den Merkmalen des Patentanspruchs 1 als auch mit den Merkmalen des Patentanspruchs 2.

Bei einem solchen aktiven Lenksystem für Kraftfahrzeuge, umfassend eine elektrische Servolenkung und eine Überlagerungslenkung mit zugehörigen Aktoren, mehrere das Fahrverhalten beeinflussende Einzelsysteme, die Lenkanforderungen erzeugen sowie ein Lenkkoordinator-System zur Erzeugung von Steuersignalen für die Aktoren der Servolenkung und der Überlagerungslenkung, das auf der Basis der vorliegenden Lenkanforderungen diese Steuersignale erzeugt, ist gemäß der ersten Lösung vorgesehen, dass bei einer Lenkanforderung zur Einstellung eines von einem Einzelsystem vorgegebenen Überlagerungswinkels ein entsprechendes Steuersignal für den Aktor der Überlagerungslenkung von dem Lenkkoordinator-System zur Erzeugung eines dem aktuellen Lenkwinkel zu überlagernden Lenkwinkels bereitgestellt wird, wobei zur vollständigen oder teilweisen Momentenabstützung des Aktors der Überlagerungslenkung gleichzeitig ein Steuersignal für den Aktor der Servolenkung erzeugt wird.

So kann bereits die Lenkanforderung zur Einstellung eines vorgegebenen Überlagerungswinkels beinhalten, dass eine Kompensation des Moments an dem Lenkrad mittels eines von der Servolenkung zusätzlich erzeugten Moments erfolgen soll, oder es wird von dem Lenkkoordinator-System selbst entschieden, ob eine Kompensation erfolgt. Dies kann in Abhängigkeit des Einzelsystems entschieden werden, von dem die Lenkanforderung kommt. So ist es sinnvoll, im Falle einer Lenkanforderung eines ESP-Systems eine vollständige Kompensation durchzuführen, so dass der Fahrer von dem Eingriff nichts bemerkt. Falls die Lenkanforderung jedoch von einem Spurhalte-System erzeugt wird, ist es besser, keine oder nur eine teilweise Kompensation des am Lenkrad entstehenden Moments durchzuführen, um den Fahrer über den Lenkeingriff zu informieren. Auch ist es möglich, dass eine Lenkanforderung von einem Einzelsystem erzeugt wird, das ausdrücklich eine Kompensation ausschließt.

Gemäß der zweiten Lösung ist es vorgesehen, dass bei einer Lenkanforderung zur Einstellung eines von einem Einzelsystem vorgegebenen Überlagerungsmoments ein entsprechendes Steuersignal für den Aktor der Servolenkung von dem Lenkkoordinator-System zur Erzeugung eines dem aktuellen Lenkmoment zu überlagernden zusätzlichen Lenkmoments bereitgestellt wird, wobei zur vollständigen oder teilweisen Kompensation des zusätzlichen Lenkmoments gleichzeitig ein Steuersignal für den Aktor der Überlagerungslenkung erzeugt wird.

Auch bei dieser Lösung der Aufgabe kann die Lenkanforderung gleichzeitig eine Kompensationsanforderung beinhalten. Andernfalls entscheidet das Lenkkoordinator-System auf der Basis, welches Einzelsystem diese Anforderung erzeugt hat. Ebenso ist es möglich, dass eine Lenkanforderung von einem Einzelsystem erzeugt wird, das ausdrücklich eine Kompensation ausschließt.

Bei beiden erfindungsgemäßen Lösungen wird die Kompensation, also die Höhe des entstehenden Moments durch das Lenkkoordinator-System berechnet und braucht daher nicht in jedem Einzelsystem, also jedem Assistenzsystem separat integriert werden.

Mit einem solchen erfindungsgemäßen Lenkkoordinator-System, das die funktionalen Lenkeingriffe von unterschiedlichen Einzelsystemen, insbesondere Assistenzsystemen zusammenführt und koordiniert, wird eine einfache Schnittstelle für die Lenkanforderungen dieser Einzelsysteme realisiert. Diese zentrale Schnittstelle verteilt die angeforderten Lenkeingriffe an die jeweiligen Aktoren weiter, so dass in vorteilhafter Weise diese Aktoren keine Verwaltung mehrerer Eingriffe vornehmen müssen, da diese direkt von dem Lenkkoordinator-System als Schnittstelle angesprochen werden. Damit ist es mit verringerter Komplexität möglich, Winkel- und Momenten-überlagerungen der Servolenkung und der Überlagerungslenkung gemeinsam über dieses Lenkkoordinator-System als zentrale Schnittstelle zu nutzen.

Ferner ist es hinsichtlich einer geringeren Komplexität von Vorteil, dass die Servolenkung als auch die Überlagerungslenkung nur über eine einfache Schnittstelle mit dem Lenkkoordinator-System kommunizieren, da es für die Aktoren der Lenkungen nicht mehr relevant ist, wie die Lenkanforderungen erzeugt werden. Es werden nur noch Winkel- und Momentenanforderungen und ggf. Statusmeldungen der Lenkungen ausgetauscht.

Bei einer vorteilhaften Weiterbildung der Erfindung wird bei gleichzeitigem Vorliegen mehrerer Lenkanforderungen von dem Lenkkoordinator-System eine Priorisierung der Lenkanforderungen durchgeführt. So kann bspw. Stabilisierungseingriffen der Vorrang gegeben werden, da die Fahrzeugstabilität eine höhere Relevanz hat als bspw. eine Parkassistenz oder eine Änderung der geschwindigkeitsabhängigen Lenkungsübersetzung. Gemäß einer besonderen Weiterbildung der Erfindung werden bei Vorliegen gleichzeitiger Lenkanforderungen mit von mehreren Einzelsystemen vorgegebenen Überlagerungswinkeln diese von dem Lenkkoordinator-System zu einem Überlagerungswinkel verrechnet und ein Steuersignal für den Aktor der Überlagerungslenkung zur Einstellung des einen Überlagerungswinkels erzeugt. In entsprechender Weise kann auch bei Vorliegen gleichzeitiger Lenkanforderungen mit von mehreren Einzelsystemen vorgegebenen Überlagerungsmomenten diese von dem Lenkkoordinator-System zu einem Überlagerungsmoment verrechnet werden, wobei ein Steuersignal für den Aktor der Servolenkung zur Einstellung des einen Überlagerungsmoments erzeugt wird. Dies kann bspw. dann Eintreten, wenn ein bestimmter Wert eines geschwindigkeitsabhängigen Überlagerungsmoments eingestellt ist und gleichzeitig eine ESP-Eingriff erfolgen soll. Dann werden die angeforderten Überlagerungsmomente gegeneinander verrechnet. Eine Verrechnung von Lenkanforderungen erfolgt bspw. auch dann, wenn eine Lenkanforderung eines Spurhalteassistenten umgesetzt wird und anschließend ein ESP-Eingriff angefordert wird. Damit werden die aus den von den Einzelsystemen vorgegebenen Radlenkwinkel abgeleiteten Überlagerungswinkel bzw. Überlagerungsmomente der verschiedenen Lenkanforderungen gegeneinander verrechnet und dabei insbesondere eine unerwünschte gegenseitige Beeinflussung der Lenkungen vermieden.

Gemäß einer Weiterbildung der Erfindung kann das Lenkkoordinator-System in einem eigenen Steuergerät realisiert werden, das dann über eine Schnittstelle, bspw. über eine direkte Kommunikation oder über ein Bussystem, bspw. einen CAN-Bus mit den Einzelsystemen kommuniziert.

Schließlich ist es auch möglich, das erfindungsgemäße Lenkkoordinator-System in eines der Lenkungen, also entweder in der Servolenkung oder in der Überlagerungslenkung zu integrieren, wodurch ein zusätzliches Steuergerät eingespart und die Kommunikation zwischen dem Lenkkoordinator-System und den Lenkungen vereinfacht wird.

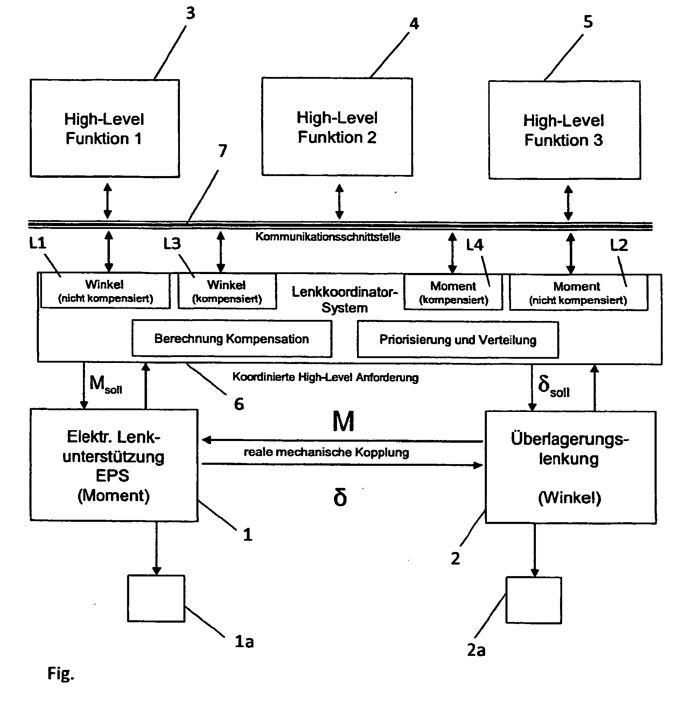

Die Erfindung wird nachfolgend anhand eines Ausführungsbeispiels unter Bezugnahme auf eine einzige Figur ausführlich beschrieben.

Diese Figur zeigt ein Blockschaltbild eines Ausführungsbeispiels eines erfindungsgemäßen aktiven Lenksystems für ein Kraftfahrzeug.

Dieses Lenksystem weist als Einzelsysteme mehrere Assistenzsysteme 3, 4 und 5 auf, die jeweils über eine Kommunikationsschnittstelle, hier ein CAN-Bus 7 Lenkanforderungen an ein Lenkkoordinator-System 6 senden.

Das Assistenzsystem 3 realisiert als Funktion 1 eine ESP-Funktion, das Assistenzsystem 4 als Funktion 2 eine Spurhalte-Funktion und das Assistenzsystem 5 als Funktion 3 eine Park-Funktion, bspw. zum automatischen Einparken. Diese Funktionen 1 bis 3 sind nur beispielhaft erwähnt, und können durch andere ersetzt werden oder es können auch weitere solcher Funktionen dem Lenksystem hinzugefügt werden.

Die von den Assistenzsystemen 3, 4 und 5 erzeugten Lenkanforderungen werden in dem Lenkkoordinator-System 6 als zentrale Schnittstelle zusammengeführt und von dort aus mittels die angeforderten Eingriffe umsetzenden Steuersignale an eine Servolenkung (EPS: Electric Power Steering) 1 mit zugehörigem Aktor 1a und/oder an eine Überlagerungslenkung 2 mit zugehörigem Aktor 2a verteilt. Beide Lenkungen 1 und 2 sind natürlich mechanisch gekoppelt, einmal über ein Moment M, das aufgrund eines von der Überlagerungslenkung 2 erzeugten auf die Lenksäule zu überlagernden Winkels δₛₒₗₗ auf die Servolenkung 1 wirkt, und zum anderen umgekehrt über einen Winkel δ, der aufgrund eines von der Servolenkung erzeugten Sollmoments Mₛₒₗₗ auf die Überlagerungslenkung 2 wirkt.

Als Aktor 1a der Servolenkung 1 dient in der Regel ein mit der Zahnstange gekoppelter Elektromotor. Über diesen Elektromotor wird zusätzlich zum normalen Servomoment ein Zusatzmoment bzw. das Sollmoment Mₛₒₗₗ übertragen, das der Fahrer am Lenkrad als Drehmoment wahrnimmt.

Als Aktor 2a der Überlagerungslenkung 2 wird in der Regel ein von einem Elektromotor angetriebenes, auf der Lenksäule angeordnetes Planetengetriebe verwendet, so dass ein zusätzlicher Lenkwinkel δₛₒₗₗ dem vom Fahrer eingestellten Lenkwinkel überlagert wird.

Die Assistenzsysteme 3, 4 und 5 können jeweils eine Lenkanforderung über den CAN-Bus 7 an das Lenkkoordinator-System 6 senden, die entweder die Einstellung eines bestimmten Radwinkels mit einem berechneten zusätzlichen Winkel δₛₒₗₗ zur Überlagerung auf den aktuellen Lenkwinkel oder die Erzeugung eines bestimmten Lenkmoments Mₛₒₗₗ beinhaltet. Eine solche Lenkanforderung ist in der Figur symbolisch mit den Bezugszeichen L₁ bzw. L₂ dargestellt und wird von dem Lenkkoordinations-System 6 in Steuersignale umgesetzt, die entweder der Überlagerungslenkung 2 zur entsprechenden Ansteuerung des Aktors 2a zur Einstellung des Winkels δₛₒₗₗ gemäß der Lenkanforderung L₁ oder an die Servolenkung 1 zur entsprechenden Ansteuerung des Aktors 1a zur Erzeugung des Lenkmoments Mₛₒₗₗ gemäß der Lenkanforderung L₂ zugeführt werden. Solche Lenkanforderungen L₁ und L₂ führen durch das Lenkkoordinator-System 6 zu Steuersignalen, die nur eine Winkelüberlagerung und nur eine Momentenüberlagerung bewirken, so dass die entsprechenden Momenten-Rückwirkungen auf das Lenkrad von dem Fahrer wahrnehmbar sind. Eine solche Wirkung ist bspw. bei von dem Spurhalte-Assistenzsystem 4 angeforderten Eingriff erwünscht, um damit dem Fahrer mitzuteilen, dass ein Eingriff erfolgt oder dass er dem aufgeprägten Moment mit seinen Lenkbewegungen folgen soll. Ebenso sollte eine Lenkanforderung des ParkAssistenzsystems 5 nicht kompensiert werden, also läge in einem solchen Fall eine Lenkanforderung L₁ oder L₂ vor.

Die Lenkanforderungen können auch zusätzlich eine Kompensationsanforderung enthalten, wonach bspw. die Wirkung eines von der Überlagerungslenkung 2 erzeugten zusätzlichen Winkels δₛₒₗₗ durch ein von der Servolenkung erzeugtes Moment abgestützt werden soll, so dass der Fahrer ein solches Abstützmoment nicht selbst erzeugen muss. Eine solche Lenkanforderung ist in der Figur symbolhaft mit einem Bezugszeichen L₃ bezeichnet.

Eine Lenkanforderung L₄ fordert entsprechend ein Sollmoment Mₛₒₗₗ an, das von dem Aktor 1a der Servolenkung 1 erzeugt wird und dessen Momenten-Rückwirkung am Lenkrad durch eine entsprechende Ansteuerung des Aktors 2a der Überlagerungslenkung 2 kompensiert werden soll.

Eine Kompensation der jeweiligen Momenten-Rückwirkungen ist dann sinnvoll, wenn der Fahrer von den Eingriffen nichts bemerken soll, also bspw. wenn von dem ESP-Assistenzsystem 3 ein Stabilisierungseingriff initiiert wird.

Das zur Kompensation der jeweiligen Wechselwirkung erforderliche Moment wird von dem Lenkkoordinator-System 6 durchgeführt, indem bspw. aus einem mittels einer Lenkanforderung L₃ angeforderten Winkeleingriff der Wert des dadurch entstehenden Moments berechnet wird und gleichzeitig mit der Ansteuerung der Überlagerungslenkung 2 dem Aktor 1a der Servolenkung 1 ein Steuersignal zugeführt wird, durch das ein dem berechneten Wert entsprechendes Korrekturmoment erzeugt wird. Die Berechnung der Korrekturmomente kann mittels in dem Lenkkoordinator-System 6 abgelegten Kennfeldern durchgeführt werden.

Es ist auch möglich, in Abhängigkeit des Assistenzsystems, das die Lenkanforderung erzeugt, nur eine teilweise Kompensation der Wechselwirkung zwischen den Lenkungen 1 und 2 durchzuführen. Auch in diesem Fall würde das Lenkkoordinator-System 6 das Maß der Kompensation berechnen und ein Steuersignal für den Aktor 1a oder 2a erzeugen.

In dem Lenkkoordinator-System 6 werden auch eingehende Lenkanforderungen priorisiert, falls diese zu unerwünschten Eingriffen oder sich gegenseitig widersprechenden Lenkeinstellungen führen würden. Hierzu sind in dem Lenkkoordinator-System 6 Priorisierungslisten abgelegt. So wird bspw. der Lenkanforderung des ESP-Assistenzsystems 3 der Vorrang vor einer Lenkanforderung des Parkassistenzsystems 5 gegeben, da Stabilisierungseingriffe eine höhere Relevanz für die Fahrzeugstabilität haben als eine Parkassistenz.

Schließlich kann das Lenkkoordinator-System 6 gleichzeitig eingehende Lenkanforderungen von mehreren Assistenzsystemen 3, 4 und 5 mit identischen oder nahezu identischen Winkel- oder Momenten-Überlagerungen derart verarbeiten, dass diese zu einem einzigen Überlagerungswinkel oder einem einzigen Wert eines Moments verrechnet werden, wobei ein Steuersignal bzw. Steuersignale für einen Aktor 1a oder 2a bzw. für Aktoren 1a und 2a der Servolenkung 1 oder/und der Überlagerungslenkung 2 zur Einstellung des einen Überlagenrngswinkels bzw. des einen Werts des Moments erzeugt wird bzw. werden. Damit werden die aus den von den Einzelsystemen vorgegebenen Radlenkwinkel abgeleiteten Überlagerungswinkel bzw. Überlagerungsmomente der verschiedenen Lenkanforderungen gegeneinander verrechnet und dabei insbesondere eine unerwünschte gegenseitige Beeinflussung der Lenkungen vermieden.

Das Lenkkoordinator-System 6 kann in einem eigenen Steuergerät untergebracht sein und über den CAN-Bus 7 kommunizieren. Anstelle des CAN-Buses 7 kann auch eine direkte Kommunikation vorgesehen werden. Auch ist es möglich, das Lenkkoordinator-System 6 entweder in dem Steuergerät der Servolenkung 1 oder in dem Steuergerät der Überlagerungslenkung 2 unterzubringen, wodurch ein zusätzliches Steuergerät eingespart wird und sich die Kommunikation zwischen dem Lenkkoordinator-System 6 und den Lenkungen 1 und 2 vereinfacht.

Ferner kommunizieren die Servolenkung 1 und die Überlagerungslenkung 2 mit dem Lenkkoordinator-System 6 über vereinfachte Schnittstellen, lediglich Statusmeldungen über die Verfügbarkeit der jeweiligen Lenkung 1 oder 2 werden an das Lenkkoordinator-System 6 zurückgemeldet.

Neben den oben genannten Vorteilen führt das erfindungsgemäße Lenksystem auch dazu, dass sich aufgrund des Lenkkoordinator-Systems 6 eine einfachere Austauschbarkeit der Aktoren 1a und 1b der Lenkungen 1 und 2 ergibt, um bspw. eine Steer-by-Wire-Lenkung aufzubauen. Wegen des Lenkkoordinator-Systems 6 braucht in einem solchen Fall lediglich eine Anpassung der Schnittstellen in Richtung der Lenkungen erfolgen, wobei eine Anpassung in den einzelnen Assistenzsystemen 3, 4 und 5 nicht erforderlich ist. Damit wird mit einem solchen Lenkkoordinator-System 6 die Flexibilität eines Lenksystems wesentlich erhöht.

### Bezugszeichen

- 1: Servolenkung
- 1 a: Aktor der Servolenkung 1
- 2: Überlagerungslenkung
- 2a: Aktor der Überlagerungslenkung 2
- 3: Einzelsystem, Assistenzsystem
- 4: Einzelsystem, Assistenzsystem
- 5: Einzelsystem, Assistenzsystem
- 6: Lenkkoordinator-System
- 7: CAN-Bus

## Patentansprüche

1. Aktives Lenksystem für Kraftfahrzeuge, umfassend
- eine elektrische Servolenkung (1) und eine Überlagerungslenkung (2) mit zugehörigen Aktoren (1 a, 2a),
- mehrere das Fahrverhalten beeinflussende Einzelsysteme (3, 4, 5), die Lenkanforderungen erzeugen, sowie
- ein Lenkkoordinator-System (6) zur Erzeugung von Steuersignalen für die Aktoren (1a, 2a) der Servolenkung (1) und der Überlagerungslenkung (2), welches auf der Basis der vorliegenden Lenkanforderungen diese Steuersignale erzeugt,
**dadurch gekennzeichnet, dass** bei einer Lenkanforderung zur Einstellung eines von einem Einzelsystem (3, 4, 5) vorgegebenen Überlagerungswinkels (δₛₒₗₗ) ein entsprechendes Steuersignal für den Aktor (2a) der Überlagerungslenkung (2) von dem Lenkkoordinator-System (6) zur Erzeugung eines dem aktuellen Lenkwinkel zu überlagernden Lenkwinkels (δₛₒₗₗ₎ bereitgestellt wird, wobei zur vollständigen oder teilweisen Momentenabstützung des Aktors (2a) der Überlagerungslenkung (9) gleichzeitig ein Steuersignal für den Aktor (1a) der Servolenkung (1) erzeugt wird.

2. Aktives Lenksystem für Kraftfahrzeuge, umfassend
- eine elektrische Servolenkung (1) und eine Überlagerungslenkung (2) mit zugehörigen Aktoren (1a, 2a),
- mehrere das Fahrverhalten beeinflussende Einzelsysteme (3, 4, 5), die Lenkanforderungen erzeugen, sowie
- ein Lenkkoordinator-System (6) zur Erzeugung von Steuersignalen für die Aktoren (1a, 2a) der Servolenkung (1) und der Überlagerungslenkung (2), welches auf der Basis der vorliegenden Lenkanforderungen diese Steuersignale erzeugt,
**dadurch gekennzeichnet, dass** bei einer Lenkanforderung zur Einstellung eines von einem Einzelsystem (3, 4, 5) vorgegebenen Überlagerungsmoments (Mₛₒₗₗ) ein entsprechendes Steuersignal für den Aktor (1a) der Servolenkung (1) von dem Lenkkoordinator-System (6) zur Erzeugung eines dem aktuellen Lenkmoment zu überlagernden zusätzlichen Lenkmoments (Mₛₒₗₗ) bereitgestellt wird, wobei zur vollständigen oder teilweisen Kompensation des zusätzlichen Lenkmoments gleichzeitig ein Steuersignal für den Aktor (2a) der Überlagerungslenkung (2) erzeugt wird.

3. Aktives Lenksystem nach Anspruch 1 oder 2,
**dadurch gekennzeichnet, dass** bei gleichzeitigem Vorliegen mehrerer Lenkanforderungen von dem Lenkkoordinator-System (6) eine Priorisierung der Lenkanforderungen durchgeführt wird.

4. Aktives Lenksystem nach einem der vorhergehenden Ansprüche,
**dadurch gekennzeichnet, dass** bei Vorliegen gleichzeitiger Lenkanforderungen mit von mehreren Einzelsystemen (3, 4, 5) vorgegebenen Überlagerungswinkeln diese von dem Lenkkoordinator-System (6) zu einem Überlagerungswinkel verrechnet werden, und ein Steuersignal für den Aktor (2a) der Überlagerungslenkung (2) zur Einstellung des einen Überlagerungswinkels erzeugt wird.

5. Aktives Lenksystem nach einem der vorhergehenden Ansprüche,
**dadurch gekennzeichnet, dass** bei Vorliegen gleichzeitiger Lenkanforderungen mit von mehreren Einzelsystemen (3, 4, 5) vorgegebenen Überlagerungsmomenten diese von dem Lenkkoordinator-System (6) zu einem Überlagerungsmoment verrechnet werden und ein Steuersignal für den Aktor (1 a) der Servolenkung (2) zur Einstellung des einen Überlagerungsmoments erzeugt wird.

6. Aktives Lenksystem nach einem der vorhergehenden Ansprüche,
**dadurch gekennzeichnet, dass** das Lenkkoordinator-System (6) in einem Steuergerät realisiert ist, das über eine Schnittstelle mit den Einzelsystemen (3, 4, 5) kommuniziert.

7. Aktives Lenksystem nach einem der vorhergehenden Ansprüche,
**dadurch gekennzeichnet, dass** das Lenkkoordinator-System (6) in die Servolenkung (1) oder in die Überlagerungslenkung (2) integriert ist.

## Claims

1. Active steering system for motor vehicles, comprising
- an electric power steering system (1) and a variable ratio steering system (2) with associated actuators (1a, 2a),
- a plurality of individual systems (3, 4, 5) which influence the driving behaviour and generate steering requests, and
- a steering coordinator system (6) for generating control signals for the actuators (1a, 2a) of the power steering system (1) and of the variable ratio steering system (2), which steering coordinator system (6) generates these control signals on the basis of the steering requests which are present,
**characterized in that** in the case of a steering request for setting a superimposition angle (δₛₑₜₚ) which is predefined by an individual system (3, 4, 5) a corresponding control signal for the actuator (2a) of the variable ratio steering system (2) is made available by the steering coordinator system (6) in order to generate a steering angle (δₛₑₜₚ) which is to be superimposed on the current steering angle, wherein a control signal for the actuator (1a) of the power steering system (1) is generated simultaneously in order to completely or partially assist the torque of the actuator (2a) of the variable ratio steering system (2).

2. Active steering system for motor vehicles, comprising
- an electric power steering system (1) and a variable ratio steering system (2) with associated actuators (1a, 2a),
- a plurality of individual systems (3, 4, 5) which influence the driving behaviour generate the steering requests, and
- a steering coordinator system (6) for generating control signals for the actuators (1a, 2a) of the power steering system (1) and of the variable ratio steering system (2), which steering coordinator system (6) generates these control signals on the basis of the steering requests which are present,
**characterized in that** in the case of a steering request for setting a superimposition torque (Mₛₑₜₚ) which is predefined by an individual system (3, 4, 5), a corresponding control signal for the actuator (1a) of the power steering system (1) is made available by the steering coordinator system (6) in order to generate an additional steering torque (Mₛₑₜₚ) which is to be superimposed on the current steering torque, wherein a control signal for the actuator (2a) of the variable ratio steering system (2) is generated simultaneously in order to completely or partially compensate for the additional steering torque.

3. Active steering system according to Claim 1 or 2, **characterized in that** in the case of the simultaneous presence of a plurality of steering requests by the steering coordinator system (6), the steering requests are prioritized.

4. Active steering system according to one of the preceding claims, **characterized in that** in the case of the presence of simultaneous steering requests with superimposition angles which are predefined by a plurality of individual systems (3, 4, 5) said superimposition angles are processed by the steering coordinator system (6) to form one superimposition angle, and a control signal for the actuator (2a) of the variable ratio steering system (2) is generated in order to set the one superimposition angle.

5. Active steering system according to one of the preceding claims, **characterized in that** in the case of the presence of simultaneous steering requests with superimposition torques which are predefined by a plurality of individual systems (3, 4, 5) said superimposition torques are processed by the steering coordinator system (6) to form one superimposition torque, and a control signal for the actuator (1a) of the power steering system (2) is generated in order to set the one superimposition torque.

6. Active steering system according to one of the preceding claims,
**characterized in that** the steering coordinator system (6) is implemented in a control device which communicates with the individual systems (3, 4, 5) via an interface.

7. Active steering system according to one of the preceding claims, **characterized in that** the steering coordinator system (6) is integrated into the power steering system (1) or into the variable ratio steering system (2).

## Revendications

1. Système de direction actif pour véhicules automobiles, comprenant :
- une servodirection électrique (1) et une direction à superposition (2) dotées d'actionneurs (1a, 2a) associés ;
- plusieurs systèmes individuels (3, 4, 5) influençant le comportement de conduite et produisant des demandes de direction ; ainsi que
- un système de coordination de direction (6) permettant d'émettre des signaux de commande pour les actionneurs (1a, 2a) de la servodirection (1) et de la direction à superposition (2), ledit système produisant ces signaux de commande sur la base des demandes de direction réalisées ;
**caractérisé en ce que** :
en présence d'une demande de direction effectuée pour régler un angle de superposition (δₛₒₗₗ) prédéfini par un système individuel (3, 4, 5), un signal de commande correspondant est mis à disposition par le système de coordination de direction (6) pour l'actionneur (2a) de la direction à superposition (2) pour réaliser un angle de direction (δₛₒₗₗ) à superposer à l'angle de direction actuel, un signal de commande étant produit simultanément pour l'actionneur (1a) de la servodirection (1) pour soutenir tout ou partie du couple de l'actionneur (2a) de la direction à superposition (2).

2. Système de direction actif pour véhicules automobiles, comprenant :
- une servodirection électrique (1) et une direction à superposition (2) dotées d'actionneurs (1a, 2a) associés ;
- plusieurs systèmes individuels (3, 4, 5) influençant le comportement de conduite et produisant des demandes de direction ; ainsi que
- un système de coordination de direction (6) permettant d'émettre des signaux de commande pour les actionneurs (1a, 2a) de la servodirection (1) et de la direction à superposition (2), ledit système produisant ces signaux de commande sur la base des demandes de direction réalisées ;
**caractérisé en ce que** :
en présence d'une demande de direction effectuée pour régler un couple de superposition (Mₛₒₗₗ) prédéfini par un système individuel (3, 4, 5), un signal de commande correspondant est mis à disposition par le système de coordination de direction (6) pour l'actionneur (1a) de la servodirection (1) pour réaliser un couple de direction (Mₛₒₗₗ) supplémentaire à superposer au couple de direction actuel, un signal de commande étant produit simultanément pour l'actionneur (2a) de la direction à superposition (2) pour compenser simultanément tout ou partie du couple de direction supplémentaire.

3. Système de direction actif selon la revendication 1 ou 2, **caractérisé en ce qu'**en présence simultanée de plusieurs demandes de direction provenant du système de coordination de direction (6), un ordre de priorité est donné aux demandes de direction.

4. Système de direction actif selon l'une quelconque des revendications précédentes, **caractérisé en ce qu'**en présence simultanée de demandes de direction présentant des angles de superposition prédéfinis par plusieurs systèmes individuels (3, 4, 5), ceux-ci sont recalculés par le système de coordination de direction (6) pour obtenir un angle de superposition et qu'un signal de commande est émis pour l'actionneur (2a) de la direction à superposition (2) en vue de régler ledit angle de superposition.

5. Système de direction actif selon l'une quelconque des revendications précédentes, **caractérisé en ce qu'**en présence de demandes de direction simultanées avec des couples de superposition prédéfinis par plusieurs systèmes individuels (3, 4, 5), ces demandes sont recalculées par le système de coordination de direction (6) pour obtenir un couple de superposition et qu'un signal de commande est produit pour l'actionneur (1a) de la servodirection (2) en vue de régler ledit couple de superposition.

6. Système de direction actif selon l'une quelconque des revendications précédentes, **caractérisé en ce que** le système de coordination de direction (6) est réalisé dans un appareil de commande qui communique avec les systèmes individuels (3, 4, 5) par le biais d'une interface.

7. Système de direction actif selon l'une quelconque des revendications précédentes, **caractérisé en ce que** le système de coordination de direction (6) est intégré dans la servodirection (1) ou dans la direction à superposition (2).
